# EUROPEAN PATENT APPLICATION

(11) **EP 3 597 975 A1**
(43) Date of publication of application: **22.01.2020**
(21) Application number: 19182457.2
(22) Date of filing: 26.06.2019
(51) Int. Cl.: F16L 19/02, F16L 19/025

(54) **COUPLING FOR FLUID LINE ASSEMBLY**

(30) Priority: 20.07.2018 US 201816040587
(71) Applicant: Caterpillar, Inc., Deerfield, IL 60015 (US)
(72) Inventor: Pattison, II James, Peoria, Illinois 61629-9510 (US)
(74) Representative: Boult Wade Tennant LLP

(57) **Abstract**

A coupling (114) includes a first coupler (130), a second coupler (132), a seal (134), and a friction member (136). The first coupler (130) is connectable to a first fluid line (110), and includes a first axial end face (162) with a groove (168). The second coupler (132) is connectable to a second fluid line (112), and is couplable with the first coupler (130) to define a passage (118) therethrough. The second coupler (132) includes a second axial end face (240) with a channel (246). The second axial end face (240) is contactable with the first axial end face (162). The seal (134) is received within the groove (168) and is adapted to abut the second axial end face (240) of the second coupler (132) to prevent a leakage of fluid from the passage (118). The friction member (136) is received within the channel (246) and is adapted to engage the first axial end face (162) of the first coupler (130) to restrict a torsional movement between the first coupler (130) and the second coupler (132).

## Description

### Technical Field

The present disclosure generally relates to a fluid line assembly. More particularly, the disclosure relates to a coupling that fluidly couples together fluid lines of a fluid line assembly.

### Background

Fluid, such as a hydraulic fluid, is used in numerous applications and environments. For example, earth moving machines, construction machines, agricultural equipment, various implements and attachments of such machines, etc., may perform one or more functions by use of fluid power. Fluid systems that facilitate production of fluid power may include multiple hoses, pipes, and tubes, that in concert facilitate the transfer of fluid from one part of the fluid system to another, to help perform one or more functions. For this purpose, fluid lines, such as hoses and tubes associated with such fluid systems may need to be connected together to facilitate fluid transfer/passage.

It is commonly known for such fluid systems to use couplings that fluidly couple two fluid lines together to facilitate fluid passage therethrough. Several of the currently available couplings, however, lack robustness to stabilize a connection between the two fluid lines, both during assembly of the two fluid lines, and thereafter. For example, one fluid line may torsionally rotate relative to the other fluid line, thereby increasing the chances of fluid leakage (or fluid leak incidence) from a joint between the two fluid lines formed by the coupling.

United States Patent No. 5,645,301 ('301 reference) relates to a union including a first and second coupling member that are held together, with frontside surfaces in interfacing contact with one another, by a threaded nut. One or more tongue and groove sealing mechanism is interposed between the interfacing frontside surfaces to provide a liquid-tight seal.

### Summary

In one aspect, the disclosure is directed towards a coupling for a fluid line assembly including a first fluid line and a second fluid line. The coupling includes a first coupler, a second coupler, a seal, and a friction member. The first coupler is adapted to be connected to the first fluid line, and includes a first axial end face with a groove. The second coupler is adapted to be connected to the second fluid line, and is couplable with the first coupler to combinedly define a passage therethrough for fluidly connecting the first fluid line with the second fluid line. The second coupler includes a second axial end face with a channel. The second axial end face is contactable with the first axial end face. The seal is at least partly received within the groove and is adapted to abut the second axial end face of the second coupler to prevent a leakage of fluid from the passage. Further, the friction member is at least partly received within the channel and is adapted to engage the first axial end face of the first coupler to restrict a torsional movement between the first coupler and the second coupler.

In another aspect, the disclosure relates to a fluid line assembly. The fluid line assembly includes a first fluid line, a second fluid line, and a coupling. The coupling includes a first coupler, a second coupler, a seal, and a friction member. The first coupler is adapted to be connected to the first fluid line, and includes a first axial end face with a groove. The second coupler is adapted to be connected to the second fluid line, and is couplable with the first coupler to combinedly define a passage therethrough for fluidly connecting the first fluid line with the second fluid line. The second coupler includes a second axial end face with a channel. The seal is at least partly received within the groove and is adapted to abut the second axial end face of the second coupler to prevent a leakage of fluid from the passage. The friction member is at least partly received within the channel and is adapted to engage the first axial end face of the first coupler to restrict a torsional movement between the first coupler and the second coupler.

### Brief Description of the Drawings

FIG. 1 is an exemplary fluid line assembly that is depicted in a partial cross-sectional view, in accordance with an embodiment of the present disclosure; and
FIG. 2 is a side cross-sectional view of the fluid line assembly of FIG. 1, in accordance with an embodiment of the present disclosure.

### Detailed Description

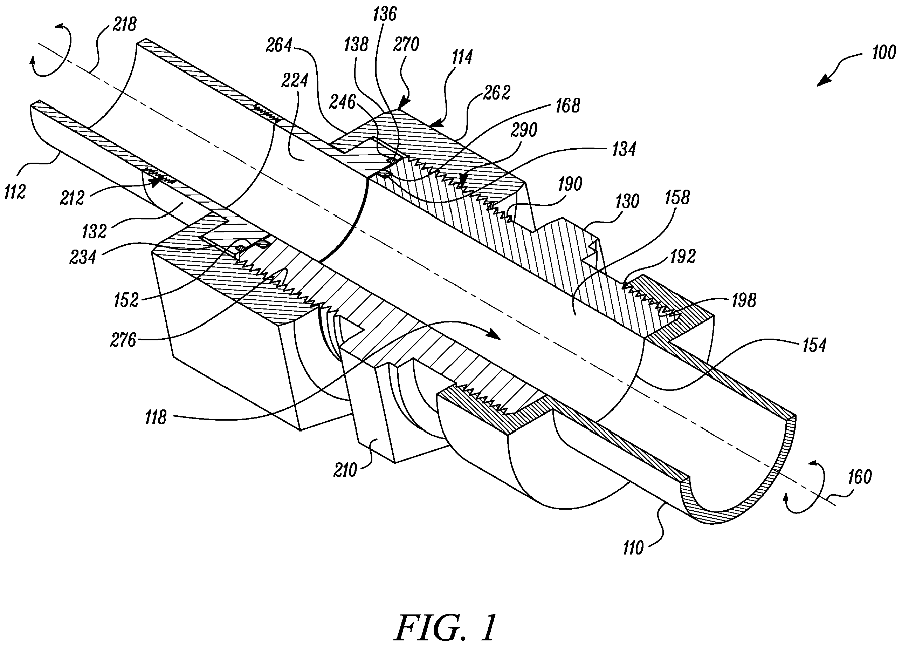

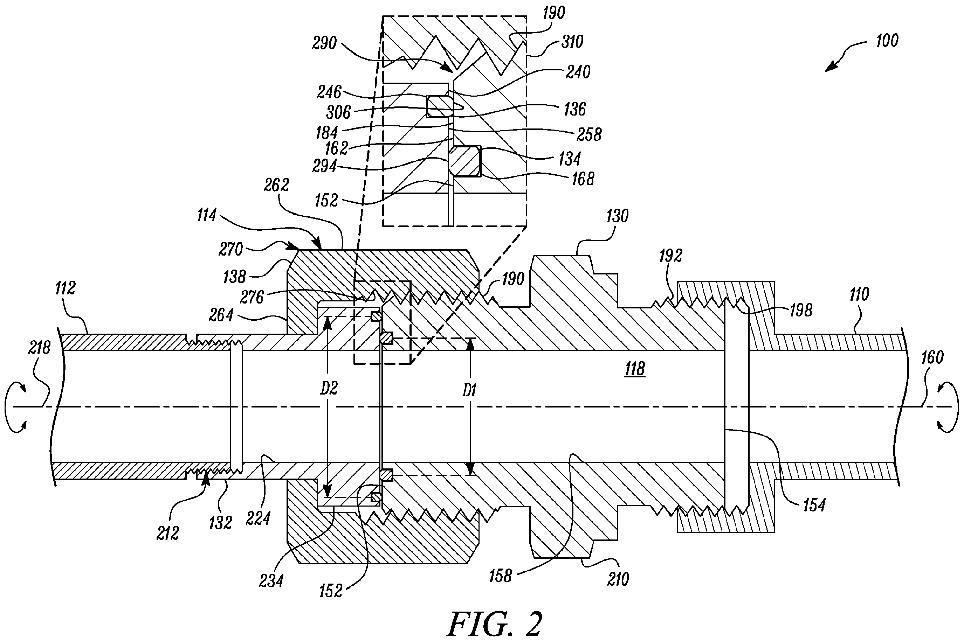

Referring to FIGS. 1 and 2, a fluid line assembly 100 is shown. The fluid line assembly 100 may be applied in a fluid system that may be set to perform a variety of functions in a myriad of environments. For example, the fluid system may include a hydraulic system that may be applied for executing functions associated with implement controls, linkage controls, braking, etc., in construction machines, forestry machines, marine machines, agricultural machines, mining machines, generator sets, and the like. Aspects of the present disclosure may be also applied to a variety of other environments, such as to fluid systems applied in domestic and commercial establishments.

The fluid line assembly 100 includes a first fluid line 110, a second fluid line 112, and a coupling 114 that fluidly connects the two fluid lines 110, 112 to each other. The fluid connection, as attained by use of the coupling 114, between the first fluid line 110 and the second fluid line 112 is such that a fluid is transmittable between the first fluid line 110 and the second fluid line 112, through the coupling 100. More particularly, the coupling 114 may define a passage 118 to facilitate a transmission of fluid therethrough. Both the first fluid line 110 and the second fluid line 112 may include and/or represent tubes, pipes, hoses, and the like. In some embodiments, it is possible for the one or both of the first fluid line 110 and the second fluid line 112 to include and/or represent inlets (not shown) and/or outlets (not shown) to different components/elements of an associated fluid system. The coupling 100 includes a first coupler 130, a second coupler 132, a seal 134, and a friction member 136. The coupling 100 also includes a locking nut 138 for securing the first coupler 130 with the second coupler 132.

The first coupler 130 is adapted to be coupled to the first fluid line 110. The first coupler 130 may include a substantially cylindrical shape, although other shapes and profiles of the first coupler 130 may be contemplated. The first coupler 130 includes a first axial end 152, a second axial end 154, and a generally cylindrical, first conduit 158, that defines a first axis 160. The first conduit 158 extends from the first axial end 152 to the second axial end 154. The first axial end 152 includes a first axial end face 162, with the first conduit 158 being open to the first axial end face 162.

The first coupler 130 includes a groove 168 formed on the first axial end face 162. The groove 168 may be an annular groove that is structured around the first conduit 158 (or the passage 118). In an embodiment, the groove 168 is formed concentrically around the first conduit 158, and defines a first mean diameter, *D1.* Although not limited, a cross-section of the groove 168 may include a rectangular profile (or a square profile), as shown. Nevertheless, a cross-section of the groove 168 may include a variety of other profiles, such as, but not limited to, an arcuate profile, an oblong profile, or an elliptical profile. Further, with the exception of the groove 168, the first axial end face 162 may include a thoroughly planarly defined surface, referred to as first planar surface 184.

Further, the first coupler 130 may include a first threaded portion 190 and a second threaded portion 192. The first threaded portion 190 may be formed relatively adjacent to the first axial end 152, while the second threaded portion 192 may be formed relatively adjacent to the second axial end 154. The first threaded portion 190 may be adapted for an engagement with the locking nut 138, whereas the second threaded portion 192 may be adapted for an engagement with a threaded end 198 of the first fluid line 110.

In some embodiments, and as shown, the first coupler 130 may include a radially extending flange 210, which is structured and arranged in between the first threaded portion 190 and the second threaded portion 192. The flange 210 may include a polygonal shape that may be engageable by a spanner or a wrench (not shown) to facilitate a screwing/unscrewing of the first coupler 130 relative to the first fluid line 110 and/or relative to the locking nut 114.

The second coupler 132 may be adapted to be coupled to the second fluid line 112. As an example, the second coupler 132 may be coupled to second fluid line 112 by a threaded connection 212. Further, the second coupler 132 is also couplable (e.g., retentively couplable) with the first coupler 130 to combinedly define the passage 118 therethrough (to fluidly connect the first fluid line 110 with the second fluid line 112, as already noted above). For example, the second coupler 132 includes a substantially cylindrical shape, and has a generally cylindrical, second conduit 224 structured therethrough. The second conduit 224 defines a second axis 218, and, together, the second conduit 224 and the first conduit 158 define the passage 118 of the coupling 114. In one example, upon an assembly of the first coupler 130 with the second coupler 132, the first axis 160 may lie in alignment with the second axis 218.

A coupling between the second coupler 132 and the first coupler 130 may define a joint 290 therebetween. For facilitating fluid transmission through the passage 118, the first axial end face 162 and the second axial end face 240 may meet, and/or may contact each other at the joint 290. As may be noted in an enlarged callout 310 for the joint 290 in FIG. 2, a clearance between the first axial end face 162 and the second axial end face 240 is generally exaggerated. Such exaggeration is solely to assist with identifying the different portions and/or elements disposed close to the joint 290, as is discussed in the present disclosure. It may be appreciated that in an actual practice, and upon establishing the assembly between the first coupler 130 and the second coupler 132, such an exaggerated clearance may be non-existent.

The second coupler 132 includes a flanged end 234 defining a second axial end face 240 of the second coupler 132, with the second conduit 224 being open to the second axial end face 240. The second coupler 132 may include a channel 246 formed on the second axial end face 240. The channel 246 may be an annular channel that is structured around the second conduit 224 (or around the passage 118). In an embodiment, the channel 246 is formed concentrically around the second conduit 224, and defines a second mean diameter, *D*2. According to an aspect of the present disclosure, the second mean diameter, *D2*, is larger than the first mean diameter, *D1.* As with the cross-section of the groove 168, a cross-section of the channel 246 may include a rectangular (or square) profile, as well. However, a cross-section of the channel 246 may include a variety of other profiles too, such as, but not limited to, an arcuate profile, an oblong profile, or an elliptical profile. In some embodiments, an area defined by the cross-section of the groove 168 is larger than an area defined by the cross-section of the channel 246. Further, with the exception of the channel 246, the second axial end face 240 may include a thoroughly planarly defined surface, referred to as second planar surface 258.

The locking nut 138 may be used to attain an assembly and engagement between the first coupler 130 and the second coupler 132. The locking nut 138 may include an L-shaped cross-section, as shown, that defines a nut-shaped body 262 and locking edge 264 that extends radially inwards from one of the axial end portions 270 of the nut-shaped body 262. The nut-shaped body 262 may include inner threads 276. Upon an assembly of the first coupler 130 to the second coupler 132, the first threaded portion 190 may be engaged with the inner threads 276 of the nut-shaped body 262, while the locking edge 264 may be engaged with the flanged end 234 of the second coupler 132. In so doing, the first coupler 130 and the second coupler 132 may be coupled together.

It may be noted that in some embodiments, the first coupler 130 may be integrally formed with the first fluid line 110. In such a case, the second axial end 154 and the second threaded portion 192 of the first coupler 130 may be absent. Additionally, or optionally, the second coupler 132 may also be integrally formed with the second fluid line 112. In such a case, threaded connection 212 may be absent, and a coupling between the first coupler 130 and the second coupler 132 may be attained solely by using the locking nut 138.

The seal 134 may be adapted to be positioned between the first axial end face 162 and the second axial end face 240 to seal a joint 290 formed by assembling the first coupler 130 with the second coupler 132. In that manner, the seal 134 is adapted to prevent leakage of fluid from the passage 118. For example, the seal 134 may be an annular seal that may be at least partly received within the groove 168 of the first coupler 130, and may be adapted to abut the second axial end face 240 of the second coupler 132 to attain an effective sealing at the joint 290. For example, the seal 134 may include a sealing surface 294 that may contact the second planar surface 258 of the second axial end face 240. In some exemplary embodiments, the seal 134 may include an elastomeric material, and may be formed as an O-ring. In some further examples, the seal 134 may be formed from a resilient material including, but not limited to, rubber (such as nitrile rubber) and/or other elastomers.

The friction member 136 may be an anti-rotation device, and may be positioned between the first coupler 130 and the second coupler 132, adapted to restrict a rotation between the first coupler 130 and the second coupler 132. For example, the friction member 136 may be positioned in between the first axial end face 162 and the second axial end face 240. According to one or more aspects of the present disclosure, the friction member 136 is at least partly received within the channel 246 and is adapted to engage the first axial end face 162 of the first coupler 130 to restrict a torsional movement between the first coupler 130 and the second coupler 132. For example, the friction member 136 may include a friction surface 306 that may contact the first planar surface 184 of the first axial end face 162.

In some embodiments, the friction member 136 may include an annular ring or an O-ring, formed from an industry standard elastomeric material or a resilient material, such as rubber (such as nitrile rubber) and/or other elastomers. In an embodiment, the friction member 136 includes a smaller cross-sectional area as compared to a cross-sectional area of the seal 134. Nevertheless, in some cases, the friction member 136 may include a larger cross-sectional area as compared to a cross-sectional area of the seal 134. In yet some cases, a cross-sectional area of the friction member 136 may be equal to a cross-sectional area of the seal 134. In some embodiments, it is possible for the friction member 136 to also act as a seal between the first axial end face 162 and the second axial end face 240. In so doing, the friction member 136 may define a second stage leakage checkpoint (after a first stage leakage checkpoint is defined by the seal 134) for checking and preventing fluid leakage from the passage 118.

Further, with the second mean diameter, *D*2, being larger than the first mean diameter, *D1,* the seal 134 may be disposed radially proximal to the first conduit 158 (and thus to the passage 118 defined by the coupling 114), while the friction member 136 may be disposed relatively distal to the second conduit 224 (and thus to the passage 118 defined by the coupling 114). Accordingly, in some examples, the friction member 136 may include a diameter larger than a diameter of the seal 134. In some embodiments, the friction surface 306 of the friction member 136 may include a knurling, a high-friction coating, and the like, so as to enhance a coefficient of friction between the friction surface 306 and the first planar surface 184, and restrict a torsional movement or rotation between the first axial end face 162 and the second axial end face 240, and thus between the first coupler 130 and the second coupler 132, during operations, and/or assembly.

In some exemplary embodiments, the friction member 136 may include an intermittent array of friction elements (not shown) formed throughout a curvature of the friction member 136, and which may be contactable with the first planar surface 184 of the first axial end face 162. For example, the friction elements may be formed and aligned in a manner to facilitate a one-way torsional movement for assembling the first coupler 130 relative to the second coupler 132, while, at the same time, said friction elements may prevent a reverse torsional movement between the first coupler 130 and the second coupler 132. In such a case, the friction member 136 may serve to be a sacrificial element adapted for disintegration were a disassembly of the first coupler 130 from the second coupler 132 required.

### Industrial Applicability

During assembly, an operator may first couple the first coupler 130 with the first fluid line 110. For coupling the first coupler 130 with the first fluid line 110, the operator may use a wrench to engage the flange 210 of the first coupler 130 to screw and tighten the first coupler 130 to the first fluid line 110. The second coupler 132 may be coupled to the second fluid line 112 by way of the threaded connection 212. In some embodiments, and as already noted above, the first coupler 130 may be integral to the first fluid line 110, and thus a coupling therebetween may be unrequired. Similarly, the second coupler 132 may be integral to the second fluid line 112, in some cases, and, in such cases, the second coupler 132 need not be coupled to second fluid line 112 by the threaded connection 212.

Having coupled the first coupler 130 with the first fluid line 110 and the second coupler 132 with the second fluid line 112, the locking edge 264 of the locking nut 138 may be engaged against the flanged end 234 of the second coupler 132, and the inner threads 276 of the nut-shaped body 262 may be brought into contact and engagement with the first threaded portion 190 of the first coupler 130, and, then, the inner threads 276 of the locking nut 138 may be threadably coupled with the first threaded portion 190 of the first coupler 130. In so doing, the first coupler 130 is coupled to the second coupler 132. Further, the first axis 160 may be aligned with the second axis 218, and the joint 290 may be defined by the coupling 114. In that manner, a fluid coupling between the first fluid line 110 and the second fluid line 112 may be established.

Further, upon establishing the assembly between the first coupler 130 and the second coupler 132, the seal 134 may contact the second axial end face 240 (or the second planar surface 258), while the friction member 136 may contact the first axial end face 162 (or the first planar surface 184). In particular, the sealing surface 294 may contact the second planar surface 258 of the second axial end face 240, and the friction surface 306 may contact the first planar surface 184 of the first axial end face 162. Effectively, the seal 134 may provide for a positive sealing between the first axial end face 162 and the second axial end face 240, and thus a sealed joint or connection between the first fluid line 110 and the second fluid line 112 may be established to facilitate fluid transfer to/from the first fluid line 110 from/to the second fluid line 112, through the passage 118.

Further, the friction member 136 may provide for restricting a rotation between the first axial end face 162 and the second axial end face 240 (or between the first coupler 130 and the second coupler 132). With use of the friction member 136, various detrimental factors, including operational vibrations, and the like, as sustained by the coupling 114 during operations (and/or during assembly) may be unable to alter the joint 290 formed between the first coupler 130 and the second coupler 132. Thus, fluid leakage from the joint 290 may be avoided. In brevity, the friction member 136 provides for a robust and lasting fluid connection between the first fluid line 110 and the second fluid line 112, both during assembly of the two fluid lines 110, 112, and thereafter.

It will be apparent to those skilled in the art that various modifications and variations can be made to the system of the present disclosure without departing from the scope of the disclosure. Other embodiments will be apparent to those skilled in the art from consideration of the specification and practice of the system disclosed herein. It is intended that the specification and examples be considered as exemplary only, with a true scope of the disclosure being indicated by the following claims and their equivalent.

## Claims

1. A coupling (114) for a fluid line assembly (100) including a first fluid line (110) and a second fluid line (112), the coupling (114) comprising:
a first coupler (130) adapted to be connected to the first fluid line (110), and including a first axial end face (162) with a groove (168);
a second coupler (132) adapted to be connected to the second fluid line (112), and being couplable with the first coupler (130) to combinedly define a passage (118) therethrough for fluidly connecting the first fluid line (110) with the second fluid line (112), the second coupler (132) including a second axial end face (240) with a channel (246), the second axial end face (240) being contactable with the first axial end face (162);
a seal (134) at least partly received within the groove (168) and adapted to abut the second axial end face (240) of the second coupler (132) to prevent a leakage of fluid from the passage (118); and
a friction member (136) at least partly received within the channel (246) and adapted to engage the first axial end face (162) of the first coupler (130) to restrict a torsional movement between the first coupler (130) and the second coupler (132).

2. The coupling (114) of claim 1, wherein
the groove (168) is an annular groove and the seal (134) includes an annular seal, and
the channel (246) is an annular channel and the friction member (136) includes an annular ring,
both the annular groove and the annular channel being disposed around the passage (118).

3. The coupling (114) of claim 1, wherein the seal (134) is disposed radially proximal to the passage (118) and the friction member (136) is disposed radially distal to the passage (118).

4. The coupling (114) of claim 1 further including a locking nut (138) for securing the first coupler (130) with the second coupler (132).

5. The coupling (114) of claim 1, wherein a cross-sectional area of the groove (168) is smaller as compared to a cross-sectional area of the channel (246).

6. The coupling (114) of claim 1, wherein the friction member (136) is formed from an elastomer.

7. The coupling (114) of claim 1, wherein the seal (134) is formed from an elastomer.

8. The coupling (114) of claim 1, wherein the first axial end face (162) includes a first planar surface (184), the friction member (136) including a friction surface (306) to contact the first planar surface (184).

9. The coupling (114) of claim 1, wherein the second axial end face (240) includes a second planar surface (258), the seal (134) including a sealing surface (294) to contact the second planar surface (258).

10. A fluid line assembly (100), comprising:
a first fluid line (110) and a second fluid line (112); and
a coupling (114), including:
a first coupler (130) adapted to be connected to the first fluid line (110), and including a first axial end face (162) with a groove (168);
a second coupler (132) adapted to be connected to the second fluid line (112), and being couplable with the first coupler (130) to combinedly define a passage (118) therethrough for fluidly connecting the first fluid line (110) with the second fluid line (112), the second coupler (132) including a second axial end face (240) with a channel (246);
a seal (134) at least partly received within the groove (168) and adapted to abut the second axial end face (240) of the second coupler (132) to prevent a leakage of fluid from the passage (118); and
a friction member (136) at least partly received within the channel (246) and adapted to engage the first axial end face (162) of the first coupler (130) to restrict a torsional movement between the first coupler (130) and the second coupler (132).
